# EUROPEAN PATENT APPLICATION

(11) **EP 4 645 257 A1**
(43) Date of publication of application: **05.11.2025**
(21) Application number: 24275048.7
(22) Date of filing: 02.05.2024
(51) Int. Cl.: G06V 20/17, G06V 20/10, G06V 20/60, G06V 20/70

(54) **CLASSIFYING AN OBJECT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of classifying an object from a real-world environment in which an entity operates. The computer-implemented method comprises: receiving an image of the real-world environment from a camera mounted to the entity, and a hyperspectral image of the real-world environment from a hyperspectral camera mounted to the entity; inputting the image to a trained image classifier to classify an object from the image; constructing a semantic materials map of the real-world environment by labelling each pixel of the hyperspectral image with a material based on its hyperspectral signature; identifying the classified object in the semantic materials map; and verifying the classified object as one of valid and invalid based on whether the material of the object in the semantic materials map matches an expected material for the classified object.

## Description

### FIELD OF THE INVENTION

The present invention relates to methods of classifying objects. Most specifically, the methods may be methods of classifying objects from a real-world environment in which an entity operates.

### BACKGROUND

When an entity operates in a real-world environment, the entity may be equipment with a camera to capture images of the real-world environment. Typically, to classify any objects in the images, the image is input to a convolutional neural network model trained to classify objects from images.

It is an object of the present disclosure to improve on the prior art.

### SUMMARY

Embodiments of the present invention are intended to address the above technical problems.

According to an aspect of the present invention, there is provided a computer-implemented method of classifying an object from a real-world environment in which an entity operates, the computer-implemented method comprising: receiving an image of the real-world environment from a camera mounted to the entity, and a hyperspectral image of the real-world environment from a hyperspectral camera mounted to the entity; inputting the image to a trained image classifier to classify an object from the image; constructing a semantic materials map of the real-world environment by labelling each pixel of the hyperspectral image with a material based on its hyperspectral signature; identifying the classified object in the semantic materials map; and verifying the classified object as one of valid and invalid based on whether the material of the object in the semantic materials map matches an expected material for the classified object. Image classification using images, e.g. RGB images, are prone to false classifications. For instance, an object, particularly in a military setting, may be camouflaged. A camouflaged object is coloured to blend in with a background colour. Therefore, edge detection using a trained classifier on an RGB image may be difficult and the object may not be detected. Therefore, verifying objects using the semantic materials map in this way will improve classification accuracy.

In an embodiment, constructing a semantic materials map of the real-world environment by labelling each pixel of the hyperspectral image with a material based on its hyperspectral signature comprises: obtaining a hyperspectral signature for each pixel of the hyperspectral image; assigning a label to each pixel based on its hyperspectral signature describing a material of the pixel; and clustering the pixels of the hyperspectral image into objects based on the associated assigned labels.

In an embodiment, clustering the pixels of the hyperspectral image into objects based on the associated assigned labels comprises: inputting the semantic label for each pixel into a machine learning clustering model.

In an embodiment, the machine learning clustering model is an unsupervised clustering model.

In an embodiment, obtaining a hyperspectral signature for each pixel of the hyperspectral image comprises: dividing light sensed by the pixel into a plurality of frequency bands; and constructing the hyperspectral signature using an intensity of light in each frequency band of the plurality of frequency bands.

In an embodiment, the plurality of frequency bands includes between 50 and 200 frequency bands.

In an embodiment, the plurality of frequency bands includes infrared frequencies, visible light frequencies, and ultraviolet frequencies.

In an embodiment, assigning a label to each pixel based on its hyperspectral signature comprises: inputting the hyperspectral signature of each pixel to a labelling model; and obtaining a semantic label associated with the respective pixels from the semantic labelling model.

In an embodiment, the labelling model is a machine learning model.

In an embodiment, the machine learning model comprises a neural network trained, using a plurality of hyperspectral signatures and respective semantic labels, to label semantically the pixel based on its hyperspectral signature.

In an embodiment, identifying the classified object in the semantic materials map comprises: positionally matching the clustered object from the hyperspectral image with the classified object from the image using positions and orientations of the respective hyperspectral camera and the camera.

In an embodiment, verifying the classified object as one of valid and invalid based on whether the material matches an expected material for the classified object comprises: retrieving a set of expected materials associated with the classified object from storage; verifying the classified object as valid if one or more of the materials of the object in the semantic materials map are present in the set of expected materials; and verifying the classified object as invalid if none of the materials from the set of expected materials are present in the materials of the object from the semantic map.

In an embodiment, verifying the classified object as valid if one or more of the materials of the object in the semantic materials map are present in the set of expected materials, comprises: determining a certainty score based on a proportion of the sub-objects that are present in the set of expected materials; and providing the certainty score with the valid classified object.

In an embodiment, the trained image classifier is a machine learning model, and optionally a convolutional neural network.

According to an aspect of the present disclosure, there is provided a computer-implemented method of operating an autonomous system of an entity, the computer-implemented method comprising: capturing a hyperspectral image using a hyperspectral camera attached to the entity, and an image using a camera attached to the entity; classifying an object using the computer-implemented method of any preceding claim; generating an operation plan for the autonomous system based on the classified object; and operating the autonomous system based on the operation plan.

According to an aspect of the present disclosure, there is provided a transitory, or non-transitory, computer-readable medium having instruction stored thereon that when executed by at least one processor, causes the at least one processor to perform the computer-implemented method of any preceding aspect or embodiment.

According to an aspect of the present disclosure, there is provided an entity comprising: a body; a hyperspectral camera mounted to the body; an autonomous system; a processor; and storage having instructions stored thereon that, when executed by the processor, cause the processor to control the autonomous system by performing the computer-implemented method of any preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a schematic diagram of an entity according to at least one embodiment;
Figure 2 is an image captured by a camera or a hyperspectral image captured by a hyperspectral camera of the entity, according to at least one embodiment;
Figure 3 is a semantic materials map constructed from the hyperspectral image, according to at least one embodiment;
Figure 4 is a hyperspectral signature of a pixel from the hyperspectral image, according to at least one embodiment;
Figure 5 is a flow chart summarising a computer-implemented method of classifying an object from a real-world environment in which an entity operates, according to at least one embodiment; and
Figure 6 is a flow chart summarising a computer-implemented method of controlling an autonomous system of an entity, according to at least one embodiment.

### DETAILED DESCRIPTION

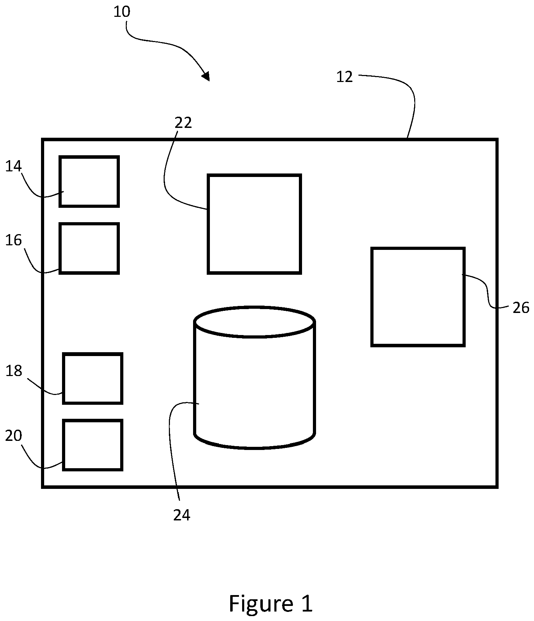

With reference to Figure 1, an entity 10 comprises a body 12, a first camera 14, a second camera 16, a first hyperspectral camera 18, a second hyperspectral camera 20, a processor 22, storage 24, and an autonomous system 26.

The entity may be a military vehicle. The military vehicle may be a tank or other armored vehicle, for example.

The first camera 14 and the second camera 16 are red, green, and blue, (RGB) cameras. A separation distance between the first and second cameras 14, 16, is known. The orientations of the first and second cameras 14, 16, is known. A separation distance between the first and second hyperspectral cameras 18, 20, is known. The orientations of the first and second hyperspectral cameras 18, 20, is known. The first and second cameras 14, 16, are each configured to capture an image, where the image is an RGB image or a grayscale image. In other words, the image is one of a three-channel image and a single channel image. The first and second hyperspectral cameras 16, 18,

The storage 24 may be non-transitory computer readable media. The storage 24 may have instructions stored thereon that when executed by the processor 22 cause the processor to perform any of the computer-implemented methods (which may be called methods herein) described herein.

The autonomous system 26 may be any system that may move autonomously based on the images or hyperspectral images. The autonomous system 26 may be an autonomous driving system when the entity is an autonomous vehicle. Alternatively, the autonomous system may be a robot arm or other robot system configured to move in the real-world environment.

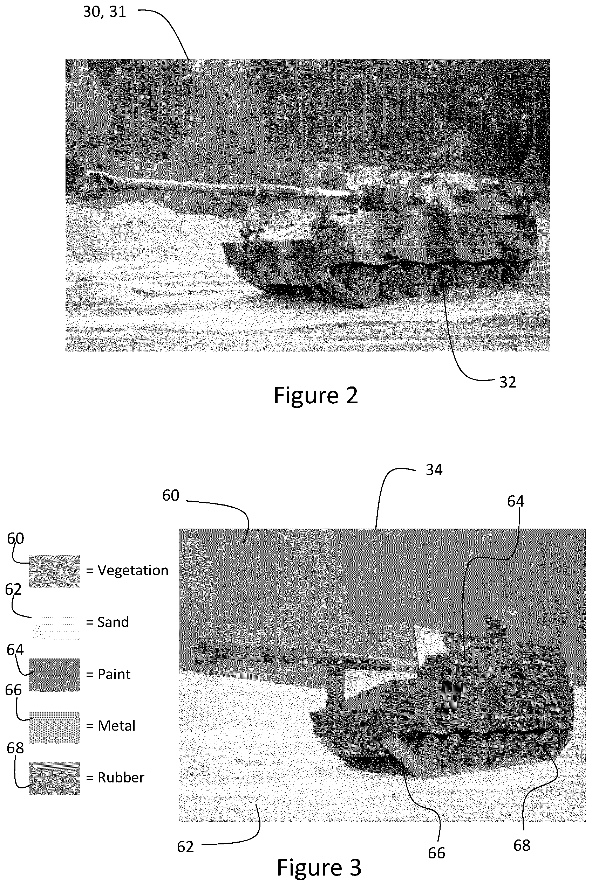

With reference to Figure 2, one of the first or second cameras 14, 16, may capture an image 30. The image may be an RGB image. Similarly, the image may be a hyperspectral image 31, where the image has been captured by one of the first or second hyperspectral cameras 18, 20. The image 30 or hyperspectral image 31 captures a real-world environment, and an object 32 operating in the real-world environment. The object 32 may be a military object, and may be an armored vehicle such as a tank.

According to at least one embodiment, a method of classifying the object 30 from the real-world environment in which the entity 10 operates comprises receiving an image 30 of the real-world environment from a camera mounted to the entity, and a hyperspectral image 31 of the real-world environment from a hyperspectral camera mounted to the entity.

The method also comprises inputting the image 30 to a trained image classifier to classify an object from the image. the trained image classifier is a machine learning model, which may be a convolutional neural network. The trained image classifier may be trained using input images and corresponding classifications of objects within the images. The classifier may be trained using backpropagation and an optimisation algorithm such as gradient descent.

With reference to Figure 3, the method also comprises constructing a semantic materials map 34 of the real-world environment by labelling each pixel of the hyperspectral image with a material based on its hyperspectral signature.

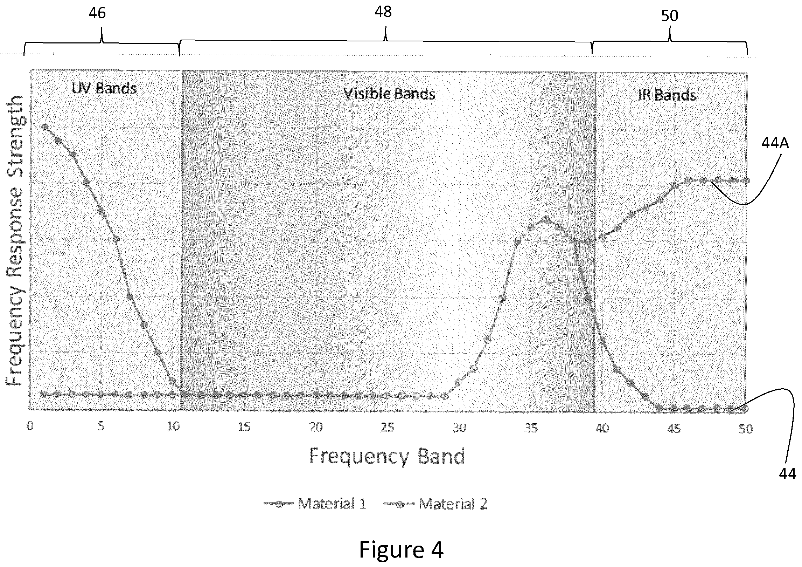

With reference to Figure 4, this may be achieved by obtaining a hyperspectral signature for each pixel of the hyperspectral image. Obtaining the hyperspectral signature may comprise, for each pixel of the hyperspectral image 30, constructing a hyperspectral curve, or hyperspectral signature, 44. Constructing the hyperspectral curve for each pixel of the hyperspectral image comprises dividing the light sensed by the pixel into a plurality of frequency bands. There may be 50 to 200 frequency bands. In the example in Figure 4, there are 50 frequency bands. The frequency bands may be grouped into three frequency ranges. The three frequency ranges include an ultraviolet, UV, range 46, a visible light range 48, and an infrared, IR, range 50.

The hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

With further reference to Figure 3, the method of constructing the semantic materials map may comprise assigning a label to each pixel based on its hyperspectral signature describing a material of the pixel.

The label may be assigned by inputting the hyperspectral signature of each pixel to a labelling model and obtaining a semantic label associated with the respective pixels from the semantic labelling model. The labelling model may be a machine learning model. The machine learning model may comprise a neural network trained, using a plurality of hyperspectral signatures and respective semantic labels, to label semantically the pixel based on its hyperspectral signature. The machine learning model may be trained using backpropagation and an optimisation algorithm such as gradient descent.

The material labels may include vegetation 60, sand, 62, paint 64, metal 66, rubber 68, etc. In the example of the tank, the vegetation 60 and sand 62 may form the background. The paint 64 may be provided on a body of the tank. The paint may provide a camouflaged effect to the body. The tracks may be identified as metallic 66, and the wheels within the tracks may be labelled as rubber 68.

Constructing the semantic materials map may also comprise clustering the pixels of the hyperspectral image into objects based on the associated assigned labels. clustering the pixels of the hyperspectral image into objects based on the associated assigned labels comprises inputting the semantic label for each pixel into a machine learning clustering model. The machine learning clustering model may be an unsupervised clustering model. The clustering model may be a k-means clustering algorithm.

The method also comprises identifying the classified object 32 in the semantic materials map 34. This may involve positionally matching the clustered object from the hyperspectral image 31 (i.e. the clustered object in the semantic materials map 34) with the classified object from the image 30 using positions and orientations of the respective hyperspectral camera 18, 20 and the camera 14, 16. For instance, a field of view of each camera is known from its properties, e.g. its lens and sensor size. The position of the object 32 in the image 30, or hyperspectral image 31, can therefore be used to determine a 2-dimensional position (e.g. height and width) relative to the camera. The positions of the cameras and their orientations can then be used to determine a relative position of the object from the image to the hyperspectral image. In this way, the positions of the clustered object in the semantic materials map and the object in the image 30 can be matched. This method works best when both of the cameras 14, 16, or hyperspectral cameras 18, 20, which are placed close together. Preferably, there may be two physical camera units. Each camera unit may include one of the cameras and one of the hyperspectral cameras which share a common lens, with light being diverted by a diversion means.

The method also comprises verifying the classified object as one of valid and invalid based on whether the material of the object in the semantic materials map matches an expected material for the classified object. This may involve retrieving a set of expected materials associated with the classified object from storage, verifying the classified object as valid if one or more of the materials of the object in the semantic materials map are present in the set of expected materials, and verifying the classified object as invalid if at least one of the materials from the set of expected materials is not present in the materials of the object from the semantic map. In other words, if none of the materials in the semantic materials map at a location of the classified object match the materials in the set of expected materials for that object, the object is verified as being invalid. Conversely, if one or more materials in the semantic materials map at a location of the classified object match the materials in the set of expected materials for that object, the object is verified as being valid.

Verifying the classified object as valid may be associated with a certainty score. In other words, when a certainty score is 100%, or 1 when normalised, the object classification can be taken to be valid. When the certainty score is less than 100%, or less than 1 when normalised, there is a degree of uncertainty about the valid verification. The method may comprise determining the certainty score based on a proportion of the sub-objects that are present in the set of expected materials. For example, if there are 5 sub-objects in an object being classified, and 3 of them are present in a set of expected materials, but 2 are not present in the set of expected materials, the certainty score may be 3/5, or 60%. In this way, the certainty score may be a ratio of sub-objects whose materials are present in the set of expected materials to sub-objects whose materials are not present in the set of expected materials. The certainty score may be provided with the valid classified object. For example, if the classification of the object is ultimately displayed to a user, the certainty score is provided too. Similarly, the certainty score may be sent to a downstream model to perform a task, e.g. trajectory generation. The downstream model may then use the certainty score to perform its task, e.g. trajectory generation.

To illustrate the above, object classification is associated with a list of constituent materials. For example, the tank is known to have paint, rubber, and metal as its constituent materials. Therefore, if materials at a location of the object in the semantic materials map include paint, rubber, and metal, the classification of the object being a tank is verified as valid. However, if only paint, or metal, is found at that location, the tank is verified as being invalid. For example, if the semantic materials map shows vegetation, metal, and rubber, at the locations of the tank, it may be that the classifier has made an error and the camouflaged body may actually be vegetation of the background and so the metal and rubber do not relate to a tank.

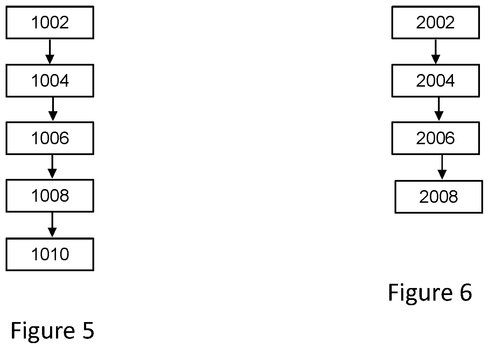

With reference to Figure 5, the computer-implemented method of classifying an object from a real-world environment in which the entity operates may be summarised as comprising: receiving 1002 an image of the real-world environment from a camera mounted to the entity, and a hyperspectral image of the real-world environment from a hyperspectral camera mounted to the entity; inputting 1004 the image to a trained image classifier to classify an object from the image; constructing 1006 a semantic materials map of the real-world environment by labelling each pixel of the hyperspectral image with a material based on its hyperspectral signature; identifying 1008 the classified object in the semantic materials map; and verifying 1010 the classified object as one of valid and invalid based on whether the material of the object in the semantic materials map matches an expected material for the classified object.

With reference to Figure 6, a computer-implemented method of operating the autonomous system of the entity may be summarised as comprising: capturing 2002 a hyperspectral image using a hyperspectral camera attached to the entity, and an image using a camera attached to the entity; classifying 2004 an object using the computer-implemented method of any preceding claim; generating 2006 an operation plan for the autonomous system based on the classified object; and operating 2008 the autonomous system based on the operation plan. The autonomous system may be a driving system in which case the operation plan may be a trajectory. In other examples, the autonomous system may not move, but may be an automatic feature of a vehicle. When the autonomous system is a system that does not move, e.g. an automated indication system, the operation plan may be a plan to operate the autonomous system e.g. to indicate a warning automatically.

## Claims

1. A computer-implemented method of classifying an object from a real-world environment in which an entity operates, the computer-implemented method comprising:
receiving an image of the real-world environment from a camera mounted to the entity, and a hyperspectral image of the real-world environment from a hyperspectral camera mounted to the entity;
inputting the image to a trained image classifier to classify an object from the image;
constructing a semantic materials map of the real-world environment by labelling each pixel of the hyperspectral image with a material based on its hyperspectral signature;
identifying the classified object in the semantic materials map; and
verifying the classified object as one of valid and invalid based on whether the material of the object in the semantic materials map matches an expected material for the classified object.

2. The computer-implemented method of Claim 1 wherein constructing a semantic materials map of the real-world environment by labelling each pixel of the hyperspectral image with a material based on its hyperspectral signature comprises:
obtaining a hyperspectral signature for each pixel of the hyperspectral image;
assigning a label to each pixel based on its hyperspectral signature describing a material of the pixel; and
clustering the pixels of the hyperspectral image into objects based on the associated assigned labels.

3. The computer-implemented method of Claim 2, wherein clustering the pixels of the hyperspectral image into objects based on the associated assigned labels comprises:
inputting the semantic label for each pixel into a machine learning clustering model.

4. The computer-implemented method of Claim 3, wherein the machine learning clustering model is an unsupervised clustering model.

5. The computer-implemented method of any of Claims 2 to 4, wherein obtaining a hyperspectral signature for each pixel of the hyperspectral image comprises:
dividing light sensed by the pixel into a plurality of frequency bands; and
constructing the hyperspectral signature using an intensity of light in each frequency band of the plurality of frequency bands.

6. The computer-implemented method of Claim 5, wherein the plurality of frequency bands includes between 50 and 200 frequency bands.

7. The computer-implemented method of Claim 5 or Claim 6, wherein the plurality of frequency bands includes infrared frequencies, visible light frequencies, and ultraviolet frequencies.

8. The computer-implemented method of any of Claims 2 to 7, wherein assigning a label to each pixel based on its hyperspectral signature comprises:
inputting the hyperspectral signature of each pixel to a labelling model; and
obtaining a semantic label associated with the respective pixels from the semantic labelling model.

9. The computer-implemented method of Claim 8, wherein the labelling model is a machine learning model.

10. The computer-implemented method of Claim 9, wherein the machine learning model comprises a neural network trained, using a plurality of hyperspectral signatures and respective semantic labels, to label semantically the pixel based on its hyperspectral signature.

11. The computer-implemented method of any of Claims 2 to 10 wherein identifying the classified object in the semantic materials map comprises:
positionally matching the clustered object from the hyperspectral image with the classified object from the image using positions and orientations of the respective hyperspectral camera and the camera.

12. The computer-implemented method of any preceding claim, wherein verifying the classified object as one of valid and invalid based on whether the material matches an expected material for the classified object comprises:
retrieving a set of expected materials associated with the classified object from storage;
verifying the classified object as valid if one of more of the materials of the object in the semantic materials map are present in the set of expected materials; and
verifying the classified object as invalid if none of the materials from the set of expected materials are present in the materials of the object from the semantic map.

13. The computer-implemented method of Claim 12, wherein verifying the classified object as valid if one or more of the materials of the object in the semantic materials map are present in the set of expected materials, comprises:
determining a certainty score based on a proportion of the sub-objects that are present in the set of expected materials; and
providing the certainty score with the valid classified object.

14. The computer-implemented method of any preceding claim, wherein the trained image classifier is a machine learning model, and optionally a convolutional neural network.

15. A computer-implemented method of operating an autonomous system, the computer-implemented method comprising:
capturing a hyperspectral image using a hyperspectral camera attached to the entity, and an image using a camera attached to the entity;
classifying an object using the computer-implemented method of any preceding claim;
generating an operation plan for the autonomous system based on the classified object; and
operating the autonomous system based on the operation plan.

16. A transitory, or non-transitory, computer-readable medium having instruction stored thereon that when executed by at least one processor, causes the at least one processor to perform the computer-implemented method of any preceding claim.

17. An entity comprising:
a body;
a hyperspectral camera mounted to the body;
an autonomous system;
a processor; and
storage having instructions stored thereon that, when executed by the processor, cause the processor to operate the autonomous system by performing the computer-implemented method of Claim 14.
